# EUROPÄISCHE PATENTANMELDUNG

(11) **EP 4 617 245 A1**
(43) Veröffentlichungstag der Anmeldung: **17.09.2025**
(21) Anmeldenummer: 24162976.5
(22) Anmeldetag: 12.03.2024
(51) Int. Cl.: C04B 7/42, C04B 28/04, C04B 18/14, C04B 18/08, C04B 14/28, C04B 103/00, C04B 14/10, C04B 14/06, C04B 20/00, C04B 103/30, C04B 103/20, C04B 103/10, C04B 103/54, C04B 16/06, C04B 14/48, C04B 111/00, C04B 111/10, C04B 111/60

(54) **CHROM(VI)-REDUZIERTER ZEMENTKLINKER**

(71) Anmelder: Solnhofer Portland- Zementwerke GmbH & Co. KG, 91807 Solnhofen (DE)
(72) Erfinder: GRIMM, Hans-Peter, 91807 Solnhofen (DE); KELLER, Thomas, 91807 Solnhofen (DE); NAR, Wolfgang, 91807 Solnhofen (DE)
(74) Vertreter: Weickmann & Weickmann PartmbB

(57) **Zusammenfassung**

Die vorliegende Erfindung ist gerichtet auf einen Zementklinker, der mindestens ein Phosphoroxid umfasst, ein Verfahren zur Herstellung des Zementklinkers und dessen Verwendung, insbesondere in hydraulischen Bindemitteln, die Verwendung einer tierischen und/oder pflanzlichen und/oder mineralischen Phosphorquelle zur Herstellung des Zementklinkers, eine Zementzusammensetzung, umfassend den Zementklinker, sowie eine Betonzubereitung, umfassend die Zementzusammensetzung.

## Beschreibung

Die vorliegende Erfindung ist gerichtet auf einen Zementklinker, der mindestens ein Phosphoroxid umfasst, ein Verfahren zur Herstellung des Zementklinkers und dessen Verwendung, insbesondere in hydraulischen Bindemitteln, die Verwendung einer tierischen und/oder pflanzlichen und/oder mineralischen Phosphorquelle zur Herstellung des Zementklinkers, eine Zementzusammensetzung, umfassend den Zementklinker, sowie eine Betonzubereitung, umfassend die Zementzusammensetzung.

Zement ist ein weit verbreiteter Baustoff. Zusammen mit Zuschlagstoffen wie Sand und Kies wird Zement für die Herstellung von Mörtel und Beton verwendet. Zement ist weltweit eines der wichtigsten hydraulischen Bindemittel und mit einer Weltproduktion von etwa 4 - 4,5 Milliarden Tonnen einer der wichtigsten Baustoffe. Der gebrannte Bestandteil des Zements wird als Zementklinker bezeichnet. Durch Zugabe von Wasser hydratisiert dieser und ist für die Aushärtung des Zements verantwortlich.

Zur Zementklinkerherstellung werden neben Brennstoffen natürliche Rohstoffe wie Kalkstein und Ton verwendet, in denen von Natur aus Chromverbindungen vorliegen. Durch die oxidierenden Bedingungen beim Brennprozess bilden sich hieraus toxische sowie krebserregende Chrom(VI)-Verbindungen, die im Zement-Endprodukt als wasserlösliche Verbindungen vorhanden sind. Beim Anmachen von Zement mit Wasser werden die gesundheitsschädlichen Chrom(VI)-Verbindungen im Anmachwasser aus dem enthaltenen Zementklinker gelöst und können z.B. bei Hautkontakt zu Allergien bis hin zu Hautgeschwüren führen. In der EU ist die Konzentration von Chrom(VI)-Verbindungen daher im verkaufsfertigen Zement auf <2 ppm begrenzt (Richtlinie 2003/53/EG, Verordnung (EG) Nr. 1907/2006).

Erreicht wird dies durch die Zugabe von Chromatreduzierern, die bei der Zementmahlung oder der Zementverladung zugesetzt werden. Aktuell eingesetzte Chromatreduzierer sind Eisen(II)-sulfat, Zinn(II)-sulfat und Antimontrioxid. Durch Zugabe dieser Reduktionsmittel werden die gesundheitsschädlichen Chrom(VI)-Ionen beim Anmachen des Mörtels oder Betons zu unschädlichen Chrom(III)-Ionen reduziert.

Die Zugabe von Chromatreduzierern ist nicht nur teuer, sondern verbraucht auch Rohstoffe und Energie und ist deshalb nicht nachhaltig. Durch die Redoxreaktion mit Chrom(VI)-Verbindungen werden die Chromatreduzierer verbraucht und können in dieser Form aus den Bauteilen ins Abwasser gelangen. Mit zunehmender Lagerungsdauer bzw. Alterung nimmt die Reaktionsfähigkeit des Chromatreduzierers im Zement ab, wodurch eine unvollständige Reduktion zu Chrom(III)-Verbindungen riskiert wird. Um die Haltbarkeitsanforderungen von zwei Monaten bei losem Zement (Silozement) bzw. sechs Monaten bei Sackzement zu gewährleisten, findet seitens der Hersteller teilweise eine Überdosierung an Chromatreduzierern statt.

Eisen(II)-sulfat ist im Vergleich zu Zinn(II)-sulfat und Antimontrioxid das kostengünstigste Mittel. Jedoch weist Eisen(II)-sulfat eine sehr leichte Oxidierbarkeit auf, sodass es in großen Mengen eingesetzt werden muss. Ferner weist Eisen(II)-sulfat gesundheitsschädigende Eigenschaften auf. Bei Kontakt wirkt es akut reizend bis ätzend auf Haut und Schleimhäute. Eine orale Aufnahme kann zu einer Schädigung des Magen-Darm-Trakts, der Leber und des Herz-Kreislaufsystems führen. Auch Zinn(II)-sulfat stellt keinen idealen Chromatreduzierer dar. Zinn wird u.a. für den Bau von Hybridautos oder Halbleitern verwendet und ist daher eigentlich zu wertvoll für die beschriebene Anwendung. Antimontrioxid, welches ein langzeitstabiles Reduktionsmittel von Chromaten darstellt, wird allerdings als möglicherweise krebserregend (H351) eingestuft.

Folglich wurde nach alternativen Chromatreduzieren gesucht, um die oben genannten Nachteile zu umgehen.

DE 20 2023 105 246 U1 offenbart einen Chromatreduzierer zur Verwendung in hydraulisch abbindenden Massen, der eine Kombination von Antimonyltartrat, Huminsäure und mindestens einen der folgenden Bestandteile umfasst: Zinn(II)-sulfat oder Eisen(II)-sulfat oder Kalium-Antimonyltratrat. Antimonyltartrat ist jedoch äußerst gesundheitsschädlich.

WO 2005/056491 A1 offenbart ein chromatarmes hydraulisches Bindemittel mit einer hohen Lagerungs-bzw. Alterungsbeständigkeit. Der eingesetzte Chromatreduzierer basiert auf einer Mischung von zwei Eisen(II)-sulfatkomponenten und einem Säureregulator. Die eingesetzten Sulfatkomponenten, Filtersalz (Eisen(II)-sulfat-Monohydrat) aus der Titandioxidproduktion und Grünsalz (Eisen(II)-sulfat-Heptahydrat) sind jedoch gesundheitsschädlich. Ein weiterer Nachteil des in WO 2005/056491 A1 offenbarten Verfahrens ist, dass bei hohen Temperaturen Kristallwasser freigesetzt wird und sich im Zement Klumpen bilden.

Einen ähnlichen Weg wie WO 2005/056491 A1 schlägt DE 10 2004 019 191 B3 vor. Dabei wird dem Zement ein Zusatzmittel zur Chromatreduktion auf Basis von Filtersalz zugegeben. Auf Grund der geringeren Löslichkeit von Filtersalz ist eine höhere Dosierung zum Zement erforderlich. Zur Erhöhung der Wirksamkeit der Chromatreduzierung wird daher vorgeschlagen, dem Filtersalz Eisen(II)-sulfat-Heptahydrat in Form von Grünsalz zuzusetzen, um ein rieselfähiges und dosierbares Produkt zu erhalten. Auch in diesem Fall wird bei hohen Temperaturen Klumpenbildung beobachtet.

WO 2007/031537 A1 offenbart einen Chromatreduzierer auf Basis von Eisen(II)-sulfat, dadurch gekennzeichnet, dass das Verhältnis von Monohydrat zu Tetrahydrat zu Heptahydrat durch die Zugabe von Wasser gesteuert werden kann.

Die aus dem Stand der Technik bekannten Chromatreduzierer sind aufgrund ihrer begrenzten Wirkungsdauer und ihrer Toxizität nachteilig.

Aufgabe der vorliegenden Erfindung ist es daher, die Nachteile des Standes der Technik zu überwinden.

Es hat sich überraschenderweise gezeigt, dass durch eine entsprechende Zusammensetzung des Zementklinkers weniger oder gar kein herkömmlicher Chromatreduzierer mehr von Nöten ist. Bei der Weiterverarbeitung zum Zement werden üblicherweise im Wesentlichen keine zusätzlichen Mengen an Chrom-VI-Verbindungen eingetragen. Ein Zusatz von weiteren Chromatreduzierern ist auch bei der Weiterverarbeitung zum Endprodukt (Zement oder Beton) nicht nötig.

Überraschenderweise wurde gefunden, dass ein Zementklinker mit mindestens einem Phosphoroxid im Wesentlichen frei von Chrom(VI)-Verbindungen ist. Der hierdurch erhaltene Zementklinker benötigt in der Weiterverarbeitung (Zementmahlung) gar keinen oder im Vergleich zum Stand der Technik nur noch einen deutlich reduzierten Zusatz von herkömmlichen Chromatreduzierern. Ohne an eine Theorie gebunden zu sein, wird angenommen, dass Phosphorquellen, die im Ausgangsmaterial des (ungebrannten) Zementklinkers zugegen sind, intern an Chromverbindungen binden, wodurch während des Brennprozesses eine Oxidierung zu Chrom(VI)-Verbindungen vermieden wird.

In einem Aspekt betrifft die Erfindung daher einen Zementklinker, der 0,2-5,0 Gew.-%, bevorzugt 0,3-1,8 Gew.-%, stärker bevorzugt 0,4-1,3 Gew.-%, stärker bevorzugt 0,4-0,8 Gew.-%, mindestens eines Phosphoroxids bezogen auf das Gesamttrockengewicht, insbesondere ausgewählt aus P₂O₅, umfasst.

Zementklinker umfasst CaO als maßgeblich hydraulisch abbindende Komponente, die für die Aushärtung des Zements oder Betons nach Zugabe von Anmachwasser verantwortlich ist.

In einer bevorzugten Ausführungsform umfasst der Zementklinker
(a) SiO₂, bevorzugt in einem Anteil von 10-40 Gew.-%, stärker bevorzugt 18-25 Gew.-%, bezogen auf das Gesamttrockengewicht,
(b) CaO, bevorzugt in einem Anteil von 50-80 Gew.-%, stärker bevorzugt 55-70 Gew.-% bezogen auf das Gesamttrockengewicht,
(c) ggf. Al₂O₃, bevorzugt in einem Anteil von 0-20 Gew.-%, stärker bevorzugt 4-10 Gew.-% bezogen auf das Gesamttrockengewicht,
(d) ggf. Fe₂O₃, bevorzugt in einem Anteil von 0-20 Gew.-%, stärker bevorzugt 2-6 Gew.-% bezogen auf das Gesamttrockengewicht, und/oder
(e) mindestens eine Chrom(III)-Verbindung, bevorzugt 1-1000 mg/kg, stärker bevorzugt 10-400 mg/kg, stärker bevorzugt 30-300 mg/kg, noch stärker bevorzugt 10-100 mg/kg bezogen auf das Gesamttrockengewicht, insbesondere ausgewählt aus Cr₂O₃.

Der Zementklinker umfasst in einer bevorzugten Ausführungsform die Klinkerphasen Tricalciumsilikat (C₃S, 3 CaO·SiO₂, Alit), Dicalciumsilikat (C₂S, 2 CaO·SiO₂, Belit), Tricalciumaluminat (C₃A, 3 CaO·Al₂O₃, Calciumaluminat), Tetracalciumaluminatferrit (C₄(A,F), 4 CaO·Al₂O₃·Fe₂O₃, Brownmillerit), Calciumoxid (CaO, Freikalk), Magnesiumoxid (MgO) und/oder Mischungen davon.

Bevorzugt enthält der Zementklinker
Tricalciumsilikat (3 CaO·SiO₂, C₃S) in einem Anteil von 20-95 Gew.-%, stärker bevorzugt 50-80 Gew.-% bezogen auf das Gesamttrockengewicht,
ggf. Dicalciumsilikat (2 CaO·SiO₂, C₂S) in einem Anteil von 0-80 Gew.-%, stärker bevorzugt 5-50 Gew.-% bezogen auf das Gesamttrockengewicht,
ggf. Tricalciumaluminat (3 CaO·Al₂O₃, C₃A) in einem Anteil von 0-30 Gew.-%, stärker bevorzugt 3-15 Gew.-% bezogen auf das Gesamttrockengewicht,
ggf. Tetracalciumaluminatferrit (4 CaO·Al₂O₃·Fe₂O₃, C₄(A,F)) in einem Anteil von 0-30 Gew.-%, stärker bevorzugt 3-15 Gew.-% bezogen auf das Gesamttrockengewicht,
ggf. Freikalk (freies CaO) in einem Anteil von 0-10 Gew.-% Gew.-%, stärker bevorzugt 0,1-3 Gew.-% bezogen auf das Gesamttrockengewicht, und
ggf. Magnesiumoxid (MgO) in einem Anteil von 0-10 Gew.-% Gew.-%, stärker bevorzugt 0,5-5 Gew.-% bezogen auf das Gesamttrockengewicht, und/oder Mischungen davon.

In einer weiteren bevorzugten Ausführungsform umfasst der Zementklinker mindestens eine Chrom(III)-Phosphat-Phase. Bevorzugt umfasst der Zementklinker
mindestens eine Ca-Cr(III)-PO₄-Phase, wobei die Ca-Cr(III)-PO₄-Phase bevorzugt ausgewählt ist aus Ca₉Cr(PO₄)₇, und/oder
mindestens eine K-Cr(III)-PO₄-Phase, wobei die K-Cr(III)-PO₄-Phase bevorzugt ausgewählt ist aus K₃Cr₂(PO₄)₃, und/oder
mindestens eine Na-Cr(III)-PO₄-Phase, wobei die Na-Cr(III)-PO₄-Phase bevorzugt ausgewählt ist aus Na₃Cr₂(PO₄)₃.

In einer bevorzugten Ausführungsform ist der Zementklinker im Wesentlichen frei von Chrom(VI)-Verbindungen, bevorzugt im Wesentlichen frei von Chrom(VI)-oxid und/oder Chromat, wie z.B. Chromtrioxid (CrOs), Calciumchromat (CaCrO₄), Calciumdichromat (CaCr₂O₇), Eisen(III)-chromat (Fe₂(CrO₄)₃), Magnesiumchromat (MgCrO₄), Aluminiumchromat (Al₂(CrO₄)₃), Natriumchromat (Na₂CrO₄), Kaliumchromat (K₂CrO₄), Kaliumdichromat (K₂Cr₂O₇), oder Bariumchromat (BaCrO₄).

"Im Wesentlichen frei von Chrom(VI)-Verbindungen" im Sinne der vorliegenden Erfindung sind Zementklinker mit einem Gehalt an Chrom(VI)-Verbindungen von <100 ppm, stärker bevorzugt <50 ppm, noch stärker bevorzugt <20 ppm, noch stärker bevorzugt <10 ppm, am stärksten bevorzugt 0,0001-2 ppm, bezogen auf das Gesamttrockengewicht.

Des Weiteren umfasst der Zementklinker bevorzugt Chrom-Phosphoroxid-Verbindungen. Die Chrom-Phosphoroxid-Verbindungen sind bevorzugt ausgewählt aus Cr(PO₃)₃, Cr₅(P₃O₁₀)₃, Cr₇(PO₄)₆ und/oder Mischungen davon.

Das molare Verhältnis von Phosphor zu Chrom liegt im Zementklinker bevorzugt in einem Bereich von 1:1 - 100:1, stärker bevorzugt in einem Bereich von 5:1-20:1.

In einem weiteren Aspekt betrifft die vorliegende Erfindung ein Verfahren zur Herstellung eines Zementklinkers, umfassend die Schritte
(A) Bereitstellen einer Rohmehlzusammensetzung und mindestens einer Phosphorquelle,
(B) gemeinsames Brennen der Rohmehlzusammensetzung, und der mindestens einen Phosphorquelle, insbesondere in einem Temperaturbereich von 800 °C - 3000 °C, zur Bildung eines Zementklinkers,
(C) Abkühlen des nach Schritt (B) erhaltenen Zementklinkers, und
(D) ggf. Mahlen des nach Schritt (C) erhaltenen Zementklinkers.

Die Rohmehlzusammensetzung in Schritt (A) umfasst bevorzugt
Kalkstein, bevorzugt in einem Anteil von 40-80 Gew.-%, stärker bevorzugt 50-70 Gew.-%, bezogen auf das Gesamttrockengewicht, und/oder
Tonmergel, bevorzugt in einem Anteil von 20-60 Gew.-%, stärker bevorzugt 30-50 Gew.-%, bezogen auf das Gesamttrockengewicht, und/oder
Korrekturkomponenten, wie Eisenoxid, Bauxit oder Sand.

Als Ausgangsprodukte für die Rohmehlzusammensetzung werden bevorzugt natürlich vorkommende Gesteins- und Ton(mergel)vorkommen genutzt.

Mergel kann sowohl Kalk als auch silikatische Bestandteile, wie Ton, enthalten. Tonmergel umfasst bevorzugt bis zu 25% Kalk und bis zu 75% Ton bezogen auf das Gesamttrockengewicht des Mergels. Bevorzugt können in der Rohmehlzusammensetzung auch andere Mergelarten eingesetzt werden, wie zum Beispiel mergeliger Kalk (bis zu 85 % Kalk, bis zu 15 % Ton), Mergelkalk (bis zu 75 % Kalk, bis zu 25 % Ton), Kalkmergel (bis zu 65 % Kalk, bis zu 35 % Ton), Mergel (bis zu 35 % Kalk, bis zu 65 % Ton), Mergelton (bis zu 15 % Kalk, bis zu 85 % Ton), und/oder mergeliger Ton (bis zu 5 % Kalk, bis zu 95 % Ton). Die %-Angaben beziehen sich hier jeweils auf das Gesamttrockengewicht.

Ferner umfasst die Rohmehlzusammensetzung bevorzugt Chrom oder Chromverbindungen. Das Chrom oder die Chromverbindungen kommen natürlich im Kalkstein und/oder Mergel vor und/oder das Chrom wird über den Brennstoff eingebracht.

Zur Herstellung der Rohmehlzusammensetzung aus Schritt (A) werden bevorzugt die natürlichen Rohstoffe wie Kalkstein oder Tonmergel während eines Mahlvorgangs getrocknet, bevorzugt in einer Vertikalmühle. Der Mahlvorgang dauert bevorzugt 5-60 min, stärker bevorzugt 10-30 min und erfolgt bevorzugt bei 90-130 °C, stärker bevorzugt bei 100-110 °C. Nach dem Trocknen werden die Rohstoffe bevorzugt gemahlen und vermischt, um die Rohmehlzusammensetzung zu bilden. Der Partikeldurchmesser der gemahlenen Rohstoffe beträgt bevorzugt <5,0 Gew.-%, stärker bevorzugt <3,0 Gew.-%, noch stärker bevorzugt 0,01-3,0 Gew.-% Rückstand in einem Sieb mit 200 µm Maschenweite.

In einer bevorzugten Ausführungsform werden der Rohmehlzusammensetzung ferner weitere Korrekturkomponenten beigemengt, wie Sand, Eisenoxid, Bauxit und/oder andere Hilfsstoffe. Diese Korrekturkomponenten dienen bevorzugt dazu, das Verhältnis von Siliciumdioxid (SiO₂) zu Tonerde (Al₂O₃) und ggf. Fe₂O₃ in engen Grenzen zu halten und erleichtern beim nachfolgenden Brennvorgang die Kalzinierung.

In einer bevorzugten Ausführungsform ist die Phosphorquelle aus Schritt (A) tierischen und/oder pflanzlichen und/oder mineralischen Ursprungs. Bevorzugt umfasst die Phosphorquelle Phosphorverbindungen, wie z.B. Phosphat, z.B. (NH₄)₂HPO₄, Phosphoroxide, z.B. P₂O₅, und/oder Mischungen davon. Die mindestens eine Phosphorquelle kann mit den Bestandteilen der Rohmehlzusammensetzung eingetragen werden, der Rohmehlzusammensetzung beigemengt werden, oder über die Prozessparameter eingeführt werden.

Das molare Verhältnis von Phosphor zu Chrom liegt bevorzugt nach Schritt (B) in einem Bereich von 1:1 - 100:1, stärker bevorzugt in einem Bereich von 5:1-20:1.

Um den Zementklinker zu bilden, werden in Schritt (B) die Rohmehlzusammensetzung und die mindestens einen Phosphorquelle gemeinsam gebrannt, insbesondere in einem Temperaturbereich von 800 °C - 3000 °C, bevorzugt 1200-1600°C. In dem Temperaturbereich verschmelzen die Ausgangsstoffe zumindest teilweise miteinander (Sintern) und bilden die oben genannten Klinkerphasen.

In einer bevorzugten Ausführungsform wird Schritt (B) für 0,5-2 h, stärker bevorzugt 0,5-1,5 h, bevorzugt im Drehrohrofen oder Schachtofen, bevorzugt in einem kontinuierlichen Prozess, durchgeführt.

Bevorzugt wird die Phosphorquelle über den Brenner aufgegeben. In diesem Fall können Phosphorverbindungen über Rückstände des Brennstoffs, wie z.B. Klärschlamm, Tiermehl, Algensedimente, etc. eingeführt werden. Bevorzugt können die Phosphorverbindungen im Gegenstrom zur Aufgabe der Rohmehlzusammensetzung geführt werden.

Es hat sich gezeigt, dass beim gemeinsamen Brennen der Rohmehlzusammensetzung mit der mindestens einen Phosphorquelle der Chrom(VI)-Gehalt im Zementklinker deutlich reduziert und sogar vermieden werden kann. Zemente, die aus dem erfindungsgemäßen Zementklinker hergestellt werden, benötigen keine oder erheblich reduzierte Mengen an herkömmlichen Chromatreduzierern.

In Schritt (C) wird der Zementklinker aus Schritt (B) abgekühlt, bevorzugt auf eine Temperatur von 50-200 °C, stärker bevorzugt auf eine Temperatur von 70-90 °C.

Ggf. wird der nach Schritt (C) erhaltene Zementklinker gemahlen. Die Partikelgröße des gemahlenen Zementklinkers beträgt bevorzugt 2000-8000 cm²/g, stärker bevorzugt 2500-6000 cm²/g Mahlfeinheit nach Blaine.

Ein weiterer Aspekt der vorliegenden Erfindung ist ein Zementklinker, der nach dem oben beschriebenen Verfahren erhältlich ist.

Ein weiterer Aspekt der vorliegenden Erfindung ist die Verwendung des Zementklinkers in hydraulischen Bindemitteln, insbesondere Zement, hydraulischen Tragschichtbindern, Putz- und Mauerbindern und/oder Fliesenklebern. Diese hydraulischen Bindemittel werden insbesondere in Mörtel, Beton oder Putz eingesetzt. Des Weiteren ist ein Aspekt der vorliegenden Erfindung die Verwendung einer tierischen und/oder pflanzlichen und/oder mineralischen Phosphorquelle zur Herstellung eines Zementklinkers, wobei die Phosphorquelle bevorzugt Phosphat, z.B. (NH₄)₂HPO₄, Phosphoroxide, z.B. P₂O₅, und/oder Mischungen davon, umfasst.

Ein weiterer Aspekt der vorliegenden Erfindung ist die Verwendung einer tierischen und/oder pflanzlichen und/oder mineralischen Phosphorquelle als Reduktionsmittel bei der Herstellung des oben beschriebenen Zementklinkers, wobei die Phosphorquelle bevorzugt Phosphat, z.B. (NH₄)₂HPO₄, Phosphoroxide, z.B. P₂O₅, und/oder Mischungen davon, umfasst.

In einem weiteren Aspekt betrifft die vorliegende Erfindung eine Zementzusammensetzung, umfassend
(1) erfindungsgemäßen Zementklinker, bevorzugt in einem Anteil von 5-98 Gew.-%, stärker bevorzugt 20-95 Gew.-% bezogen auf die Gesamttrockenzusammensetzung,
(2) Hüttensand, bevorzugt in einem Anteil von 1-95 Gew.-%, stärker bevorzugt 5-80 Gew.-% bezogen auf die Gesamttrockenzusammensetzung,
(3) Flugasche, bevorzugt in einem Anteil von 1-35 Gew.-%, stärker bevorzugt 5-20 Gew.-% bezogen auf die Gesamttrockenzusammensetzung,
(4) Kalkstein, bevorzugt in einem Anteil von 1-35 Gew.-%, stärker bevorzugt 5-35 Gew.-% bezogen auf die Gesamttrockenzusammensetzung,
(5) Puzzolan, bevorzugt in einem Anteil von 1-35 Gew.-%, stärker bevorzugt 5-35 Gew.-% bezogen auf die Gesamttrockenzusammensetzung,
(6) gebrannter Schiefer, bevorzugt in einem Anteil von 1-35 Gew.-%, stärker bevorzugt 5-35 Gew.-% bezogen auf die Gesamttrockenzusammensetzung,
(7) Silicastaub, bevorzugt in einem Anteil von 1-10 Gew.-%, stärker bevorzugt 3-8 Gew.-% bezogen auf die Gesamttrockenzusammensetzung,
(8) Gips, bevorzugt in einem Anteil von 1-10 Gew.-%, stärker bevorzugt 3-8 Gew.-% bezogen auf die Gesamttrockenzusammensetzung, und/oder
(9) ggf. weitere Recyclingmaterialien.

In einer bevorzugten Ausführungsform sind Recyclingmaterialien z.B. Betonbrechsand und/oder Tonziegel.

Die Zementzusammensetzung ist bevorzugt Portlandzement, Portlandkompositzement, Hochofenzement, Puzzolanzement oder ein Zement nach DIN EN 197.

In einem weiteren Aspekt betrifft die vorliegende Erfindung eine Betonzubereitung, umfassend
(I) erfindungsgemäße Zementzusammensetzung, bevorzugt in einer Menge von 100-600 kg/m³, bezogen auf einen m³ der Betonzusammensetzung,
(II) ggf. Sand, bevorzugt in einer Menge von 0-2000 kg/m³ Betonzusammensetzung,
(III) ggf. Splitt, bevorzugt in einer Menge von 0-2000 kg/m³ Betonzusammensetzung,
(IV) ggf. Kies, bevorzugt in einer Menge von 0-2000 kg/m³ Betonzusammensetzung,
(V) ggf. Zusatzmittel, bevorzugt in einer Menge von 0-15 kg/m³ Betonzusammensetzung, wobei die Zusatzmittel bevorzugt ausgewählt sind aus Betonverflüssiger, Fließmittel, Luftporenbildner, Dichtungsmittel, Verzögerer, Beschleuniger, und/oder Stabilisierer,
(VI) ggf. Zusatzstoffe, bevorzugt in einer Menge von 0-400 kg/m³ Betonzusammensetzung, wobei die Zusatzstoffe bevorzugt ausgewählt sind aus Flugasche, und/oder Kalksteinmehl,
(VII) ggf. Farbzusätze, bevorzugt in einer Menge von 0-100 kg/m³ Betonzusammensetzung,
(VIII) ggf. Mikrosilika, bevorzugt in einer Menge von 0-100 kg/m³, Betonzusammensetzung,
(IX) ggf. Kunststofffasern, bevorzugt in einer Menge von 0-20 kg/m³ Betonzusammensetzung, wobei die Kunststofffasern bevorzugt ausgewählt sind aus Polypropylen,
(X) ggf. Stahlfasern, bevorzugt in einer Menge von 0-100 kg/m³ Betonzusammensetzung, und
(XI) Anmachwasser, bevorzugt in einer Menge von 50-400 kg/m³ Betonzusammensetzung.

In einer bevorzugten Ausführungsform umfasst die Betonzubereitung Recyclingmaterialien, wie z.B. RC-Material (RC = Recycling), Betonrückstände, und/oder Recyclingwasser.

Die vorliegende Erfindung umfasst die folgenden Punkte:
1. Zementklinker, der 0,2-5,0 Gew.-%, bevorzugt 0,3-1,8 Gew.-%, stärker bevorzugt 0,4-1,3 Gew.-%, stärker bevorzugt 0,4-0,8 Gew.-% mindestens eines Phosphoroxids bezogen auf das Gesamttrockengewicht, insbesondere ausgewählt aus P₂O₅, umfasst.
2. Zementklinker nach Punkt 1, der im Wesentlichen frei von Chrom(VI)-Verbindungen, bevorzugt im Wesentlichen frei von Chrom(VI)-oxid und/oder Chromat, wie z.B. Chromtrioxid (CrOs), Calciumchromat (CaCrO₄), Calciumdichromat (CaCr₂O₇), Eisen(III)-chromat (Fe₂(CrO₄)₃), Magnesiumchromat (MgCrO₄), Aluminiumchromat (Al₂(CrO₄)₃), Natriumchromat (Na₂CrO₄), Kaliumchromat (K₂CrO₄), Kaliumdichromat (K₂Cr₂O₇), oder Bariumchromat (BaCrO₄) ist.
3. Zementklinker nach einem der vorhergehenden Punkte, ferner umfassend
   (a) SiO₂, bevorzugt in einem Anteil von 10-40 Gew.-%, stärker bevorzugt 18-25 Gew.-%, bezogen auf das Gesamttrokengewicht,
   (b) CaO, bevorzugt in einem Anteil von 50-80 Gew.-%, stärker bevorzugt 55-70 Gew.-% bezogen auf das Gesamttrockengewicht,
   (c) ggf. Al₂O₃, bevorzugt in einem Anteil von 0-20 Gew.-%, stärker bevorzugt 4-10 Gew.-% bezogen auf das Gesamttrockengewicht,
   (d) ggf. Fe₂O₃, bevorzugt in einem Anteil von 0-20 Gew.-%, stärker bevorzug 2-6 Gew.-% bezogen auf das Gesamttrockengewicht, und/oder
   (e) mindestens eine Chrom(III)-Verbindung, bevorzugt 1-1000 mg/kg, stärker bevorzugt 10-400 mg/kg, stärker bevorzugt 30-300 mg/kg, noch stärker bevorzugt 10-100 mg/kg bezogen auf das Gesamttrockengewicht, insbesondere ausgewählt aus Cr₂O₃.
4. Zementklinker nach einem der vorhergehenden Punkte, wobei der Gehalt an Chrom(VI)-Verbindungen <100 ppm, bevorzugt <50 ppm, stärker bevorzugt <20 ppm, noch stärker bevorzugt <10 ppm, am stärksten bevorzugt 0,0001-2 ppm, bezogen auf das Gesamttrockengewicht ist.
5. Zementklinker nach einem der vorhergehenden Punkte, wobei das molare Verhältnis von Phosphor zu Chrom in einem Bereich von 1:1 - 100:1, bevorzugt in einem Bereich von 5:1-20:1 liegt.
6. Zementklinker nach einem der vorhergehenden Punkte, umfassend
   mindestens eine Ca-Cr(III)-PO₄-Phase, wobei die Ca-Cr(III)-PO₄-Phase bevorzugt ausgewählt ist aus Ca₉Cr(PO₄)₇, und/oder
   mindestens eine K-Cr(III)-PO₄-Phase, wobei die K-Cr(III)-PO₄-Phase bevorzugt ausgewählt ist aus K₃Cr₂(PO₄)₃, und/oder
   mindestens eine Na-Cr(III)-PO₄-Phase, wobei die Na-Cr(III)-PO₄-Phase bevorzugt ausgewählt ist aus Na₃Cr₂(PO₄)₃.
7. Zementklinker nach einem der vorhergehenden Punkte, ferner umfassend Chrom-Phosphoroxid-Verbindungen, bevorzugt ausgewählt aus Cr(PO₃)₃, Cr₅(P₃O₁₀)₃, Cr₇(PO₄)₆ und/oder Mischungen davon.
8. Zementklinker nach einem der vorhergehenden Punkte, umfassend
   Tricalciumsilikat (3 CaO·SiO₂, C₃S), bevorzugt in einem Anteil von 20-95 Gew.-%, stärker bevorzugt 50-80 Gew.-% bezogen auf das Gesamttrockengewicht,
   ggf. Dicalciumsilikat (2 CaO·SiO₂, C₂S), bevorzugt in einem Anteil von 0-80 Gew.-%, stärker bevorzugt 5-50 Gew.-% bezogen auf das Gesamttrockengewicht,
   ggf. Tricalciumaluminat (3 CaO·Al₂O₃, C₃A), bevorzugt in einem Anteil von 0-30 Gew.-%, stärker bevorzugt 3-15 Gew.-% bezogen auf das Gesamttrockengewicht,
   ggf. Tetracalciumaluminatferrit (4 CaO·Al₂O₃·Fe₂O₃), bevorzugt in einem Anteil von 0-30 Gew.-%, stärker bevorzugt 3-15 Gew.-% bezogen auf das Gesamttrockengewicht,
   ggf. Freikalk (freies CaO), bevorzugt in einem Anteil von 0-10 Gew.-% Gew.-%, stärker bevorzugt 0,1-3 Gew.-% bezogen auf das Gesamttrockengewicht, und
   ggf. Magnesiumoxid (MgO), bevorzugt in einem Anteil von 0-10 Gew.-% Gew.-%, stärker bevorzugt 0,5-5 Gew.-% bezogen auf das Gesamttrockengewicht,
   oder Mischungen davon.
9. Verfahren zur Herstellung eines Zementklinkers nach einem der Punkte 1-8, umfassend die Schritte:
   (A) Bereitstellen einer Rohmehlzusammensetzung und mindestens einer Phosphorquelle,
   (B) gemeinsames Brennen der Rohmehlzusammensetzung, und der mindestens einen Phosphorquelle, insbesondere in einem Temperaturbereich von 800 °C - 3000 °C, zur Bildung eines Zementklinkers,
   (C) Abkühlen des nach Schritt (B) erhaltenen Zementklinkers, und
   (D) ggf. Mahlen des nach Schritt (C) erhaltenen Zementklinkers.
10. Verfahren zur Herstellung eines Zementklinkers nach Punkt 9, wobei die Rohmehlzusammensetzung
   Kalkstein, bevorzugt in einem Anteil von 40-80 Gew.-%, stärker bevorzugt 50-70 Gew.-% bezogen auf das Gesamttrockengewicht, und/oder
   Tonmergel, bevorzugt in einem Anteil von 20-60 Gew.-% stärker bevorzugt 30-50 Gew.-% bezogen auf das Gesamttrockengewicht, und/oder
   Korrekturkomponenten, wie Eisenoxid, Bauxit oder Sand umfasst.
11. Verfahren zur Herstellung eines Zementklinkers nach einem der Punkte 9-10, wobei die Rohmehlzusammensetzung ferner Chrom oder Chromverbindungen umfasst.
12. Verfahren zur Herstellung eines Zementklinkers nach einem der Punkte 9-11, wobei die Phosphorquelle tierischen und/oder pflanzlichen und/oder mineralischen Ursprungs ist.
13. Verfahren zur Herstellung eines Zementklinkers nach einem der Punkte 9-12, wobei die Phosphorquelle Phosphorverbindungen, wie z.B. Phosphat, Phosphoroxide, z.B. P₂O₅, und/oder Mischungen davon, umfasst.
14. Verfahren zur Herstellung eines Zementklinkers nach einem der Punkte 9-13, wobei das molare Verhältnis von Phosphor zu Chrom nach Schritt (B) in einem Bereich von 1:1 - 100:1, bevorzugt in einem Bereich von 5:1-20:1 liegt.
15. Verfahren zur Herstellung eines Zementklinkers nach einem der Punkte 9-14, wobei Schritt (B) für 0,5-2 h, bevorzugt 0,5-1,5 h durchgeführt wird.
16. Verfahren zur Herstellung eines Zementklinkers nach einem der Punkte 9-15, wobei Schritt (B) im Drehrohrofen oder Schachtofen durchgeführt wird.
17. Verfahren zur Herstellung eines Zementklinkers nach einem der Punkte 9-16, wobei in Schritt (B) die Phosphorverbindungen im Gegenstrom zur Aufgabe der Rohmehlzusammensetzung geführt werden.
18. Zementklinker erhältlich nach einem Verfahren gemäß einem der Punkte 9-17.
19. Verwendung des Zementklinkers nach einem der Punkte 1-8 und 18 in hydraulischen Bindemitteln, insbesondere Zement, hydraulischen Tragschichtbindern, Putz- und Mauerbindern und/oder Fliesenklebern
20. Verwendung einer tierischen und/oder pflanzlichen und/oder mineralischen Phosphorquelle zur Herstellung von Zementklinker nach einem der Punkte 1-8 und 18, wobei die Phosphorquelle bevorzugt Phosphat, Phosphoroxide, z.B. P₂O₅, und/oder Mischungen davon, umfasst.
21. Verwendung einer tierischen und/oder pflanzlichen und/oder mineralischen Phosphorquelle als Reduktionsmittel bei der Herstellung von Zementklinker nach einem der Punkte 1-8 und 18, wobei die Phosphorquelle bevorzugt Phosphat, Phosphoroxide, z.B. P₂O₅, und/oder Mischungen davon, umfasst.
22. Zementzusammensetzung, umfassend
   (1) Zementklinker nach einem der Punkte 1-8 und 18, bevorzugt in einem Anteil von 5-98 Gew.-%, stärker bevorzugt 20-95 Gew.-% bezogen auf die Gesamttrockenzusammensetzung,
   (2) Hüttensand, bevorzugt in einem Anteil von 1-95 Gew.-%, stärker bevorzugt 5-80 Gew.-% bezogen auf die Gesamttrockenzusammensetzung,
   (3) Flugasche, bevorzugt in einem Anteil von 1-35 Gew.-%, stärker bevorzugt 5-20 Gew.-% bezogen auf die Gesamttrockenzusammensetzung,
   (4) Kalkstein, bevorzugt in einem Anteil von 1-35 Gew.-%, stärker bevorzugt 5-35 Gew.-% bezogen auf die Gesamttrockenzusammensetzung,
   (5) Puzzolan, bevorzugt in einem Anteil von 1-35 Gew.-%, stärker bevorzugt 5-35 Gew.-% bezogen auf die Gesamttrockenzusammensetzung,
   (6) gebrannter Schiefer, bevorzugt in einem Anteil von 1-35 Gew.-%, stärker bevorzugt 5-35 Gew.-% bezogen auf die Gesamttrockenzusammensetzung,
   (7) Silicastaub, bevorzugt in einem Anteil von 1-10 Gew.-%, stärker bevorzugt 3-8 Gew.-% bezogen auf die Gesamttrockenzusammensetzung,
   (8) Gips, bevorzugt in einem Anteil von 1-10 Gew.-%, stärker bevorzugt 3-8 Gew.-% bezogen auf die Gesamttrockenzusammensetzung, und/oder
   (9) ggf. Recyclingmaterialien.
23. Zementzusammensetzung nach Punkt 22, wobei die Recyclingmaterialien Betonbrechsand und/oder Tonziegel sind.
24. Zementzusammensetzung nach einem der Punkte 22-23, wobei die Zementzusammensetzung Portlandzement, Portlandkompositzement, Hochofenzement, Puzzolanzement oder ein Zement nach DIN EN 197 ist.
25. Betonzubereitung, umfassend
   (I) die Zementzusammensetzung nach einem der Punkte 22-24, bevorzugt in einer Menge von 100-600 kg/m³, bezogen auf einen m³ der Betonzusammensetzung,
   (II) ggf. Sand, bevorzugt in einer Menge von 0-2000 kg/m³ Betonzusammensetzung,
   (III) ggf. Splitt, bevorzugt in einer Menge von 0-2000 kg/m³ Betonzusammensetzung,
   (IV) ggf. Kies, bevorzugt in einer Menge von 0-2000 kg/m³ Betonzusammensetzung,
   (V) ggf. Zusatzmittel, bevorzugt in einer Menge von 0-15 kg/m³ Betonzusammensetzung, wobei die Zusatzmittel bevorzugt ausgewählt sind aus Betonverflüssiger, Fließmittel, Luftporenbildner, Dichtungsmittel, Verzögerer, Beschleuniger, und/oder Stabilisierer,
   (VI) ggf. Zusatzstoffe, bevorzugt in einer Menge von 0-400 kg/m³ Betonzusammensetzung, wobei die Zusatzstoffe bevorzugt ausgewählt sind aus Flugasche, und/oder Kalksteinmehl,
   (VII) ggf. Farbzusätze, bevorzugt in einer Menge von 0-100 kg/m³ Betonzusammensetzung,
   (VIII) ggf. Mikrosilica, bevorzugt in einer Menge von 0-100 kg/m³, Betonzusammensetzung,
   (IX) ggf. Kunststofffasern, bevorzugt in einer Menge von 0-20 kg/m³ Betonzusammensetzung, wobei die Kunststofffasern bevorzugt ausgewählt sind aus Polypropylen,
   (X) ggf. Stahlfasern, bevorzugt in einer Menge von 0-100 kg/m³ Betonzusammensetzung, und
   (XI) Anmachwasser, bevorzugt in einer Menge von 50-400 kg/m³ Betonzusammensetzung.

## Patentansprüche

1. Zementklinker, der 0,2-5,0 Gew.-%, bevorzugt 0,3-1,8 Gew.-%, stärker bevorzugt 0,4-1,3 Gew.-%, stärker bevorzugt 0,4-0,8 Gew.-% mindestens eines Phosphoroxids bezogen auf das Gesamttrockengewicht, insbesondere ausgewählt aus P₂O₅, umfasst,
wobei der Gehalt an Chrom(VI)-Verbindungen bevorzugt <100 ppm bezogen auf das Gesamttrockengewicht ist, und/oder wobei das molare Verhältnis von Phosphor zu Chrom bevorzugt in einem Bereich von 1:1 - 100:1 liegt.

2. Zementklinker nach Anspruch 1, der im Wesentlichen frei von Chrom(VI)-Verbindungen, bevorzugt im Wesentlichen frei von Chrom(VI)-oxid und/oder Chromat, wie z.B. Chromtrioxid (CrOs), Calciumchromat (CaCrO₄), Calciumdichromat (CaCr₂O₇), Eisen(III)-chromat (Fe₂(CrO₄)₃), Magnesiumchromat (MgCrO₄), Aluminiumchromat (Al₂(CrO₄)₃), Natriumchromat (Na₂CrO₄), Kaliumchromat (K₂CrO₄), Kaliumdichromat (K₂Cr₂O₇), oder Bariumchromat (BaCrO₄) ist.

3. Zementklinker nach einem der vorhergehenden Ansprüche, ferner umfassend
(a) SiO₂, bevorzugt in einem Anteil von 10-40 Gew.-%, stärker bevorzugt 18-25 Gew.-%, bezogen auf das Gesamttrockengewicht,
(b) CaO, bevorzugt in einem Anteil von 50-80 Gew.-%, stärker bevorzugt 55-70 Gew.-% bezogen auf das Gesamttrockengewicht,
(c) ggf. Al₂O₃, bevorzugt in einem Anteil von 0-20 Gew.-%, stärker bevorzugt 4-10 Gew.-% bezogen auf das Gesamttrockengewicht,
(d) ggf. Fe₂O₃, bevorzugt in einem Anteil von 0-20 Gew.-%, stärker bevorzug 2-6 Gew.-% bezogen auf das Gesamttrockengewicht, und/oder
(e) mindestens eine Chrom(III)-Verbindung, bevorzugt in einem Anteil von 1-1000 mg/kg, stärker bevorzugt 10-400 mg/kg, stärker bevorzugt 30-300 mg/kg, noch stärker bevorzugt 10-100 mg/kg bezogen auf das Gesamttrockengewicht, insbesondere ausgewählt aus Cr₂O₃.

4. Zementklinker nach einem der vorhergehenden Ansprüche, umfassend
mindestens eine Ca-Cr(III)-PO₄-Phase, wobei die Ca-Cr(III)-PO₄-Phase bevorzugt ausgewählt ist aus Ca₉Cr(PO₄)₇, und/oder
mindestens eine K-Cr(III)-PO₄-Phase, wobei die K-Cr(III)-PO₄-Phase bevorzugt ausgewählt ist aus K₃Cr₂(PO₄)₃, und/oder
mindestens eine Na-Cr(III)-PO₄-Phase, wobei die Na-Cr(III)-PO₄-Phase bevorzugt ausgewählt ist aus Na₃Cr₂(PO₄)₃, und/oder
Chrom-Phosphoroxid-Verbindungen, bevorzugt ausgewählt aus Cr(PO₃)₃, Cr₅(P₃O₁₀)₃, Cr₇(PO₄)₆ und/oder Mischungen davon.

5. Zementklinker nach einem der vorhergehenden Ansprüche, umfassend
Tricalciumsilikat (3 CaO·SiO₂, C₃S), bevorzugt in einem Anteil von 20-95 Gew.-%, stärker bevorzugt 50-80 Gew.-% bezogen auf das Gesamttrockengewicht,
ggf. Dicalciumsilikat (2 CaO·SiO₂, C₂S), bevorzugt in einem Anteil von 0-80 Gew.-%, stärker bevorzugt 5-50 Gew.-% bezogen auf das Gesamttrockengewicht,
ggf. Tricalciumaluminat (3 CaO·Al₂O₃, C₃A), bevorzugt in einem Anteil von 0-30 Gew.-%, stärker bevorzugt 3-15 Gew.-% bezogen auf das Gesamttrockengewicht,
ggf. Tetracalciumaluminatferrit (4 CaO·Al₂O₃·Fe₂O₃), bevorzugt in einem Anteil von 0-30 Gew.-%, stärker bevorzugt 3-15 Gew.-% bezogen auf das Gesamttrockengewicht,
ggf. Freikalk (freies CaO), bevorzugt in einem Anteil von 0-10 Gew.-% Gew.-%, stärker bevorzugt 0,1-3 Gew.-% bezogen auf das Gesamttrockengewicht, und
ggf. Magnesiumoxid (MgO), bevorzugt in einem Anteil von 0-10 Gew.-% Gew.-%, stärker bevorzugt 0,5-5 Gew.-% bezogen auf das Gesamttrockengewicht,
oder Mischungen davon.

6. Verfahren zur Herstellung eines Zementklinkers nach einem der Ansprüche 1-5, umfassend die Schritte:
(A) Bereitstellen einer Rohmehlzusammensetzung und mindestens einer Phosphorquelle,
(B) gemeinsames Brennen der Rohmehlzusammensetzung, und der mindestens einen Phosphorquelle, insbesondere in einem Temperaturbereich von 800 °C - 3000 °C, zur Bildung eines Zementklinkers,
(C) Abkühlen des nach Schritt (B) erhaltenen Zementklinkers, und
(D) ggf. Mahlen des nach Schritt (C) erhaltenen Zementklinkers.

7. Verfahren zur Herstellung eines Zementklinkers nach Anspruch 6, wobei die Rohmehlzusammensetzung
Kalkstein, bevorzugt in einem Anteil von 40-80 Gew.-%, stärker bevorzugt 50-70 Gew.-% bezogen auf das Gesamttrockengewicht, und/oder
Tonmergel, bevorzugt in einem Anteil von 20-60 Gew.-% stärker bevorzugt 30-50 Gew.-% bezogen auf das Gesamttrockengewicht, und/oder
Korrekturkomponenten, wie Eisenoxid, Bauxit oder Sand, und/oder
ferner Chrom oder Chromverbindungen umfasst.

8. Verfahren zur Herstellung eines Zementklinkers nach einem der Ansprüche 6-7, wobei die Phosphorquelle tierischen und/oder pflanzlichen und/oder mineralischen Ursprungs ist, und/oder
wobei die Phosphorquelle Phosphorverbindungen, wie z.B. Phosphat, Phosphoroxide, z.B. P₂O₅, und/oder Mischungen davon, umfasst.

9. Verfahren zur Herstellung eines Zementklinkers nach einem der Ansprüche 6-8,
wobei das molare Verhältnis von Phosphor zu Chrom nach Schritt (B) in einem Bereich von 1:1 - 100:1, bevorzugt in einem Bereich von 5:1-20:1 liegt, und/oder
wobei Schritt (B) für 0,5-2 h, bevorzugt 0,5-1,5 h durchgeführt wird, und/oder
wobei Schritt (B) im Drehrohrofen oder Schachtofen durchgeführt wird, und/oder
wobei in Schritt (B) die Phosphorverbindungen im Gegenstrom zur Aufgabe der Rohmehlzusammensetzung geführt werden.

10. Zementklinker erhältlich nach einem Verfahren nach einem der Ansprüche 6-9.

11. Verwendung des Zementklinkers nach einem der Ansprüche 1-5 und 10 in hydraulischen Bindemitteln, insbesondere Zement, hydraulischen Tragschichtbindern, Putz- und Mauerbindern und/oder Fliesenklebern

12. Verwendung einer tierischen und/oder pflanzlichen und/oder mineralischen Phosphorquelle zur Herstellung von Zementklinker nach einem der Ansprüche 1-5 und 10, wobei die Phosphorquelle bevorzugt Phosphat, Phosphoroxide, z.B. P₂O₅, und/oder Mischungen davon, umfasst.

13. Verwendung einer tierischen und/oder pflanzlichen und/oder mineralischen Phosphorquelle als Reduktionsmittel bei der Herstellung von Zementklinker nach einem der Ansprüche 1-5 und 10, wobei die Phosphorquelle bevorzugt Phosphat, Phosphoroxide, z.B. P₂O₅, und/oder Mischungen davon, umfasst.

14. Zementzusammensetzung, umfassend
(1) Zementklinker nach einem der Ansprüche 1-5 und 10, bevorzugt in einem Anteil von 5-98 Gew.-%, stärker bevorzugt 20-95 Gew.-% bezogen auf die Gesamttrockenzusammensetzung,
(2) Hüttensand, bevorzugt in einem Anteil von 1-95 Gew.-%, stärker bevorzugt 5-80 Gew.-% bezogen auf die Gesamttrockenzusammensetzung,
(3) Flugasche, bevorzugt in einem Anteil von 1-35 Gew.-%, stärker bevorzugt 5-20 Gew.-% bezogen auf die Gesamttrockenzusammensetzung,
(4) Kalkstein, bevorzugt in einem Anteil von 1-35 Gew.-%, stärker bevorzugt 5-35 Gew.-% bezogen auf die Gesamttrockenzusammensetzung,
(5) Puzzolan, bevorzugt in einem Anteil von 1-35 Gew.-%, stärker bevorzugt 5-35 Gew.-% bezogen auf die Gesamttrockenzusammensetzung,
(6) gebrannter Schiefer, bevorzugt in einem Anteil von 1-35 Gew.-%, stärker bevorzugt 5-35 Gew.-% bezogen auf die Gesamttrockenzusammensetzung,
(7) Silicastaub, bevorzugt in einem Anteil von 1-10 Gew.-%, stärker bevorzugt 3-8 Gew.-% bezogen auf die Gesamttrockenzusammensetzung,
(8) Gips, bevorzugt in einem Anteil von 1-10 Gew.-%, stärker bevorzugt 3-8 Gew.-% bezogen auf die Gesamttrockenzusammensetzung, und/oder
(9) ggf. Recyclingmaterialien,
wobei die Zementzusammensetzung bevorzugt Portlandzement, Portlandkompositzement, Hochofenzement, Puzzolanzement oder ein Zement nach DIN EN 197 ist.

15. Betonzubereitung, umfassend
(I) die Zementzusammensetzung nach Anspruch 14, bevorzugt in einer Menge von 100-600 kg/m³, bezogen auf einen m³ der Betonzusammensetzung,
(II) ggf. Sand, bevorzugt in einer Menge von 0-2000 kg/m³ Betonzusammensetzung,
(III) ggf. Splitt, bevorzugt in einer Menge von 0-2000 kg/m³ Betonzusammensetzung,
(IV) ggf. Kies, bevorzugt in einer Menge von 0-2000 kg/m³ Betonzusammensetzung,
(V) ggf. Zusatzmittel, bevorzugt in einer Menge von 0-15 kg/m³ Betonzusammensetzung, wobei die Zusatzmittel bevorzugt ausgewählt sind aus Betonverflüssiger, Fließmittel, Luftporenbildner, Dichtungsmittel, Verzögerer, Beschleuniger, und/oder Stabilisierer, (VI) ggf. Zusatzstoffe, bevorzugt in einer Menge von 0-400 kg/m³ Betonzusammensetzung, wobei die Zusatzstoffe bevorzugt ausgewählt sind aus Flugasche, und/oder Kalksteinmehl,
(VII) ggf. Farbzusätze, bevorzugt in einer Menge von 0-100 kg/m³ Betonzusammensetzung,
(VIII) ggf. Mikrosilica, bevorzugt in einer Menge von 0-100 kg/m³, Betonzusammensetzung,
(IX) ggf. Kunststofffasern, bevorzugt in einer Menge von 0-20 kg/m³ Betonzusammensetzung, wobei die Kunststofffasern bevorzugt ausgewählt sind aus Polypropylen,
(X) ggf. Stahlfasern, bevorzugt in einer Menge von 0-100 kg/m³ Betonzusammensetzung, und
(XI) Anmachwasser, bevorzugt in einer Menge von 50-400 kg/m³ Betonzusammensetzung.
